(19) Europäisches Patentamt / European Patent Office / Office européen des brevets

(11) **EP 4 725 978 A1**

(12) **EUROPEAN PATENT APPLICATION**
published in accordance with Art. 153(4) EPC

(43) Date of publication:
**15.04.2026 Bulletin 2026/16**

(21) Application number: **24819587.7**

(22) Date of filing: **05.06.2024**

(51) International Patent Classification (IPC):
$C08G\ 77/445^{(2006.01)}$   $C08L\ 83/04^{(2006.01)}$
$C08L\ 83/10^{(2006.01)}$   $C08G\ 77/20^{(2006.01)}$
$C08G\ 77/12^{(2006.01)}$   $C08K\ 3/36^{(2006.01)}$

(52) Cooperative Patent Classification (CPC):
**C08G 77/12; C08G 77/20; C08G 77/445;**
**C08K 3/36; C08L 83/04; C08L 83/10**

(86) International application number:
**PCT/KR2024/007746**

(87) International publication number:
**WO 2024/253436 (12.12.2024 Gazette 2024/50)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **07.06.2023 KR 20230073158**

(71) Applicant: **KCC Silicone Corporation**
**Seoul 06608 (KR)**

(72) Inventors:
• **KIM, Seunghan**
  **Seoul 06608 (KR)**
• **KO, Taeho**
  **Seoul 06608 (KR)**
• **KIM, Insu**
  **Seoul 06608 (KR)**
• **JO, Min-Woo**
  **Seoul 06608 (KR)**

(74) Representative: **Ipsilon**
**Le Contemporain**
**50 Chemin de la Bruyère**
**69574 Dardilly Cedex (FR)**

(54) **POLYESTER MODIFIED SILICONE RESIN, AND SILICONE COMPOSITION CONTAINING SAME FOR ENCAPSULANT**

(57) The present invention relates to a polyester-modified silicone resin composition comprising a polyester polyol and a first organopolysiloxane, wherein the first organopolysiloxane comprises an aryl group and an alkoxy group, and comprises 1 to 40 mol% of an M unit represented by $(R^1_3SiO_{1/2})$, 20 to 80 mol% of a T unit represented by $(R^2SiO_{3/2})$, 1 to 60 mol% of a D unit represented by $(R^3_2SiO_{2/2})$, and 10 mol% or less of a Q unit represented by $(SiO_{4/2})$, a polyester-modified silicon resin prepared therefrom, and a silicone composition for an encapsulant comprising same.

EP 4 725 978 A1

**Description**

**TECHNICAL FIELD**

The present application claims priority to Korean Patent Application No. 10-2023-0073158 filed on June 7, 2023, the disclosures of which are incorporated herein as a part of the specification.

The present invention relates to a polyester-modified silicone resin including M units and T units and having excellent adhesion and durability, and a silicone composition for an encapsulant comprising the same, which have a low aryl group content and minimizes a yellowing problem which causes color change in a cured product manufactured.

**BACKGROUND ART**

Organic resins are widely used in various fields due to excellent processability, light weight, low cost, and impact resistance. In particular, silicone resins are widely used in various industrial fields due to excellent heat resistance, cold resistance, electrical insulation, weather resistance, water repellency and transparency. For example, addition-curable silicone compositions, that is, addition-curable organopolysiloxane compositions are used in various fields such as optical components (for example, optical lenses) and/or encapsulants due to rapid curing, absence of by-product generation during curing, and excellent formability.

It is also known that such silicone resins are modified with polyester, an epoxy resin, or the like to improve various physical properties such as heat resistance. In particular, polyester-modified silicone resins have excellent weather resistance and heat resistance, and show less discoloration due to heat deterioration among modified silicone resins and are used in various fields such as building paints, automotive paints, transport mufflers, paints and paints for cooking utensils. The conventional polyester-modified silicone resins are usually produced by a multi-step reaction process including: a step of preparing a polyester resin using a saturated polybasic acid and a polyhydric alcohol; a step of preparing a silicone resin a by hydrolyzing and/or condensing reactions of the prepared polyester resin and a silane compound such as chlorosilane and alkoxysilane; and a step of subjecting the prepared silicone resin to a dehydration or dealcoholization condensation reaction using a metal catalyst such as titanium.

For example, Japanese Patent No. 6947913 (Patent Document 1) discloses a polysiloxane-polyester block copolymer including (i) a siloxane resin block including a siloxane unit represented by the formula: $R^1SiO_{3/2}$ [wherein $R^1$ is a monovalent hydrocarbon group] and optionally a siloxane unit represented by the formula: $SiO_{4/2}$, (ii) a siloxane linear block represented by the formula: $(R^2_2SiO_{2/2})_n$ [wherein each $R^2$ is independently a monovalent hydrocarbon group, and n is an integer of at least 5], and (iii) a polyester block. However, a siloxane resin including a Q unit represented by $SiO_{4/2}$, as in Patent Document 1, has problems such as excessively increasing the viscosity of a composition including same, or increasing the hardness of a cured product produced to lower the refractive index.

Therefore, research and development is required for a silicone resin that has excellent adhesion and durability to prevent yellowing problems, provides excellent hardness and transmittance of the manufactured cured product, and is highly suitable as an optical component and/or encapsulant.

**DISCLOSURE OF THE INVENTION**

**TECHNICAL PROBLEM**

Accordingly, the present invention aims to provide a silicone resin having excellent adhesion, excellent durability and preventing yellowing problems, and excellent hardness and transmittance of the manufactured cured product, which is highly suitable as an optical component and/or an encapsulant, and a silicone composition for an encapsulant including the same.

**TECHNICAL SOLUTION**

The present invention provides a polyester-modified silicone resin composition comprising a polyester polyol and a first organopolysiloxane,

wherein the first organopolysiloxane comprises an aryl group and an alkoxy group, and comprises 1 to 40 mol% of an M unit represented by $(R^1_3SiO_{1/2})$, 20 to 80 mol% of a T unit represented by $(R^2SiO_{3/2})$, 1 to 60 mol% of a D unit represented by $(R^3_2SiO_{2/2})$, and 10 mol% or less of a Q unit represented by $(SiO_{4/2})$,
$R^1$ is a substituted or unsubstituted alkyl group, alkoxy group, or alkenyl group,
$R^2$ is a substituted or unsubstituted aryl group or aralkyl group, and
$R^3$ is a substituted or unsubstituted alkyl group, a substituted or unsubstituted alkoxy group, a substituted or unsubstituted aryl group, or a substituted or unsubstituted alkenyl group.

In addition, the present invention provides a polyester-modified silicone resin prepared from the polyester-modified silicon resin composition and having an aryl group content of 50 mol% or less.

Further, the present invention provides a silicon composition for an encapsulant, the composition comprising:

(A) a second organopolysiloxane;
(B) an organohydrogenpolysiloxane;
(C) the polyester-modified silicone resin; and
(D) silica,

wherein the content of the polyester-modified silicone resin is 10 parts by weight to 45 parts by weight based ons 100 parts by weight of the silicone composition, and
the molar ratio of Si-H bonds to alkenyl groups in the silicone composition is 0.5 to 1.2.

## ADVANTAGEOUS EFFECTS

The polyester-modified silicone resin according to the present invention has excellent adhesion to a substrate and excellent durability due to the low aryl group content, thereby preventing yellowing problems. In addition, a cured product prepared from a composition including the silicone resin has excellent hardness and transmittance and is very suitable as an optical component and/or an encapsulant.

## BEST MODE FOR CARRYING OUT THE INVENTION

Hereinafter, the present invention will be described in more detail.

In this specification, "viscosity" is measured by a common method known in the art and may be a value measured using, for example, a Brookfield viscometer (LVDV) or a rheometer (MCR301, Anton Paar).

In addition, "weight average molecular weight" and "number average molecular weight" may be measured by a method well known in the art and may be a value measured by, for example, a gel permeation chromatograph (GPC) method.

Further, the equivalent or functional group content such as "aryl group content" may be measured by a method well known in the art and may represent a value measured by, for example, a titration method.

In addition, each unit used in this specification is as follows, and in this case, R means a substituted or unsubstituted hydrocarbon group.

$(R_3SiO_{1/2})$ unit: M unit
$(R_2SiO_{2/2})$ unit: D unit
$(RSiO_{3/2})$ unit: T unit
$(SiO_{4/2})$ unit: Q unit.

### Polyester-modified Silicone Resin Composition

The polyester-modified silicone resin composition according to the present invention includes a polyester polyol and a first organopolysiloxane.

### 1) Polyester Polyol

The polyester polyol imparts an ester group to a silicone resin, thereby enhancing the adhesion of the resin.

The polyester polyol may be directly synthesized according to a known method or use a commercially available product. For example, the polyester polyol may be prepared by a condensation reaction of a polyol monomer and a carboxyl group-containing monomer. Specifically, the polyester polyol may be prepared by a condensation reaction of a polyol monomer and a carboxyl group-containing aliphatic monomer.

The polyol monomer may include at least one selected from the group consisting of, for example, 1,4-cyclohexanedimethanol, ethylene glycol, propylene glycol, trimethylolpropane, trimethylolethane, triethylolpropane, 2-butyl-2-ethyl-1,3-propanediol, 2-methyl-1,3-propanediol, 1,3-butanediol, 1,4-butanediol, 1,5-pentanediol, 1,6-hexanediol, 1,4-hexanediol, diethylene glycol, dipropylene glycol, triethylene glycol, tripropylene glycol, neopentyl glycol, hydroquinone-bis(β-hydroxyethyl) ether, glycerin, pentaerythritol, and 3-methylpentanediol, and preferably, 1,4-cyclohexanedimethanol.

In addition, the carboxyl group-containing monomer may include at least one selected from the group consisting of, for example, tetrahydrophthalic anhydride, adipic acid, trimellitic anhydride, terephthalic acid, fumaric acid, phthalic anhydride, hexahydrophthalic anhydride, methylhexahydrophthalic anhydride, methyltetrahydrophthalic anhydride, succinic anhydride, isophthalic acid, azelaic acid, and maleic anhydride, and preferably include tetrahydrophthalic anhydride.

When the polyester polyol includes 1,4-cyclohexanedimethanol and tetrahydrophthalic anhydride, it is preferable in terms of increasing the transparency of the resin.

The polyester polyol may have a number average molecular weight (Mn) of 300 to 10,000 g/mol, or 500 to 5,000 g/mol. When the number average molecular weight of the polyester polyol is within the range, the effect of appropriately controlling the viscosity of the resin composition may be achieved. In addition, when the number average molecular weight of the polyester polyol is less than the range, the viscosity of the resin composition may become too low, and when exceeds the range, the viscosity of the resin composition may become too high and become like a solid, making the manufacture of the resin difficult.

In addition, the polyester polyol may have a hydroxyl value (OHv) of 10 to 500 mgKOH/g, 30 to 300 mgKOH/g, or 100 to 200 mgKOH/g. When the hydroxyl value of the polyester polyol is within the range, the effect of improving the adhesion of the prepared polyester-modified silicone resin may be achieved. In addition, when the hydroxyl value of the polyester polyol is below the range, there is a problem that the viscosity of the resin composition is insufficient because there are few hydroxyl groups that may react with the alkoxy group of an organopolysilicic acid, and when exceeds the range, the amount of residual hydroxyl groups in the prepared polyester-modified silicone resin increases, which reduces the storage properties and may cause stickiness.

The polyester polyol may have a glass transition temperature (Tg) of 0 to 40°C, 5 to 30°C, or 5 to 15°C. When the glass transition temperature of the polyester polyol is within the range, the prepared polyester-modified silicone resin has an appropriate hardness and has the effect of easy handling. Meanwhile, if the glass transition temperature of the polyester polyol is below the range, there is a problem that the prepared polyester-modified silicone resin becomes too soft and difficult to handle, and if exceeds the range, the prepared polyester-modified silicone resin becomes too hard and difficult to handle.

In addition, the polyester polyol may have a refractive index (R.I.) of 1.45 to 1.65, or 1.49 to 1.55. If the refractive index of the polyester polyol is within the range, the refractive index of the encapsulant containing same is appropriate, so that it has an effect of being suitable for application as an encapsulant for optical chips. Meanwhile, if the refractive index of the polyester polyol is less than the range, when the modified silicone resin prepared therefrom is applied as an encapsulant, there is a problem that the encapsulant becomes cloudy due to the difference in refractive indexes between the optical chip and the encapsulant, and if exceeds the range, when the modified silicone resin prepared therefrom is applied as an encapsulant, the encapsulant may become cloudy as described above due to the excessively high refractive index.

The polyester polyol resin may have a viscosity at 25°C of 2,000 to 500,000 mPa·s, 3,000 to 300,000 mPa·s, or 3,000 to 10,000 mPa·s. If the viscosity of the polyester polyol at 25°C is within the range, the prepared modified silicone resin has an effect of forming an appropriate handling viscosity. In addition, when the viscosity of the polyester polyol at 25°C is below the range, there is a problem that the viscosity of the resin composition is low to induce flowing down, making it difficult to handle, and when exceeds the range, the flowability of the resin composition is insufficient, making it difficult to handle.

The polyester-modified silicone resin composition may include the polyester polyol and the organopolysiloxane in a weight ratio of 0.02:1 to 0.3:1. Specifically, the polyester-modified silicone resin composition may include the polyester polyol and the organopolysiloxane in a weight ratio of 0.06:1 to 0.25:1, or a weight ratio of 0.08:1 to 0.15:1. When the weight ratio of the polyester polyol and the organopolysiloxane is within the range, there is an effect of preventing yellowing of the prepared modified silicone resin and improving adhesion. Meanwhile, if the weight ratio of the polyester polyol and the organopolysiloxane is less than the range, that is, if a small amount of the polyester polyol is included with respect to the weight of the organopolysiloxane, there is a yellowing problem in the prepared modified silicone resin, and if exceeds the range, that is, if an excessive amount of the polyester polyol is included with respect to the weight of the organopolysiloxane, stickiness may occur in the prepared modified silicone resin.

2) First Organopolysiloxane

The first organopolysiloxane serves to constitute the main chain of the silicone resin.

The organopolysiloxane includes an aryl group and an alkoxy group, and includes 1 to 40 mol% of an M unit represented by $(R^1_3SiO_{1/2})$, 20 to 80 mol% of a T unit represented by $(R^2SiO_{3/2})$, 1 to 60 mol% of a D unit represented by $(R^3_2SiO_{2/2})$, and 10 mol% or less of a Q unit represented by $(SiO_{4/2})$. In this case, $R^1$ is a substituted or unsubstituted alkyl group, a substituted or unsubstituted alkoxy group, or a substituted or unsubstituted alkenyl group, and is preferably a $C_{1-15}$ alkyl group, a $C_{1-15}$ alkoxy group, or a $C_{2-10}$ alkenyl group, and more preferably a methyl group or a vinyl group, and

the three $R^1$s are the same as or different from each other.

$R^2$ is a substituted or unsubstituted aryl group, or a substituted or unsubstituted aralkyl group, preferably a $C_{6-15}$ aryl group or a $C_{7-15}$ aralkyl group, and more preferably a phenyl group.

$R^3$ is a substituted or unsubstituted alkyl group, a substituted or unsubstituted alkoxy group, a substituted or unsubstituted aryl group, or a substituted or unsubstituted alkenyl group, and preferably a $C_{1-15}$ alkyl group, a $C_{1-15}$ alkoxy group, a $C_{6-15}$ aryl group, or a $C_{2-10}$ alkenyl group, and more preferably, a methyl group or a phenyl group, and the two $R^3$s are the same as or different from each other.

Specifically, the organopolysiloxane may include 10 to 40 mol%, preferably 20 to 40 mol%, and more preferably 25 to 35 mol% of the M unit represented by $(R^1{}_3SiO_{1/2})$. In addition, the organopolysiloxane may include 20 to 60 mol%, preferably 20 to 50 mol%, and more preferably 20 to 40 mol% of the T unit represented by $(R^2SiO_{3/2})$. In addition, the organopolysiloxane may include 10 to 50 mol%, preferably 20 to 50 mol%, and more preferably 30 to 50 mol% of the D unit represented by $(R^3{}_2SiO_{2/2})$. In addition, the organopolysiloxane may include 5 mol% or less, and preferably not contain, of the Q unit represented by $(SiO_{4/2})$.

When the organopolysiloxane includes 10 mol% or more of the Q unit represented by $(SiO_{4/2})$, problems such as excessively increasing viscosity or increasing hardness of the manufactured cured product to lower refractive index may occur.

More specifically, the organopolysiloxane may be represented by Formula 1 below.

[Formula 1]    $(R^1{}_3SiO_{1/2})_a(R^2SiO_{3/2})_b(R^3{}_2SiO_{2/2})_c$

In Formula 1,

$R^1$ is a substituted or unsubstituted alkyl group, a substituted or unsubstituted alkoxy group, or a substituted or unsubstituted alkenyl group, and the three $R^1$s are the same or different from each other,

$R^2$ is a substituted or unsubstituted aryl group, or a substituted or unsubstituted aralkyl group,

$R^3$ is a substituted or unsubstituted alkyl group, a substituted or unsubstituted alkoxy group, a substituted or unsubstituted aryl group, or a substituted or unsubstituted alkenyl group, and the two $R^3$s are the same or different from each other,

a, b, and c are mole fractions of each unit, and a+b+c is 1.

For example, a may be 0.01 to 0.4, b may be 0.2 to 0.8, and c may be 0.01 to 0.6.

Preferred embodiments for each of $R^1$, $R^2$, and $R^3$ are as described above.

In this case, the alkyl group and alkenyl group may be linear or branched.

The first organopolysiloxane may have a viscosity at 25°C of 500 to 500,000 mPa·s, 1,000 to 200,000 mPa·s, or 5,000 to 50,000 mPa·s. If the viscosity of the first organopolysiloxane is less than the range, there is a problem that the viscosity of the prepared polyester-modified silicone resin becomes too low, and if exceeds the range, the viscosity of the prepared polyester-modified silicone resin becomes too high, which may cause a problem in handling.

In addition, the first organopolysiloxane may have an aryl group content of 15 to 70 mol%, 20 to 60 mol%, or 20 to 30 mol%. In this case, in the "aryl group content", the 'aryl group' may be a phenyl group. When the aryl group content of the organopolysiloxane is within the range, the encapsulant including the prepared polyester-modified silicone resin exhibits a refractive index similar to that of an optical chip, thereby having the effect of maintaining transparency. Meanwhile, when the aryl group content of the first organopolysiloxane is below the range, the refractive index of the encapsulant including the prepared polyester-modified silicone resin is too low, which causes a problem of haze, and when exceeds the range, the prepared polyester-modified silicone resin may contain an excessive amount of phenyl groups, thereby causing yellowing.

The first organopolysiloxane may include an alkenyl group. Specifically, the first organopolysiloxane may have an alkenyl group content of 1 to 30 mol%, or 5 to 25 mol%. In this case, in the "alkenyl group content", the 'alkenyl group' may be a vinyl group. When the alkenyl group content of the first organopolysiloxane is within the range, the manufactured cured product has an effect of having appropriate hardness. Meanwhile, when the alkenyl group content of the first organopolysiloxane is below the range, there is a problem that the curing performance of the prepared polyester-modified silicone resin is reduced, and when exceeds the range, the prepared polyester-modified silicone resin may become sticky.

In addition, the first organopolysiloxane may have a polymerization degree of 5 to 3,000, 5 to 2,000, or 5 to 20. When the polymerization degree of the first organopolysiloxane is within the range, the prepared polyester-modified silicone resin has an appropriate viscosity, which has an effect of being easy to handle. In this case, the polymerization degree is the number of silicon atoms in one molecule of the first organopolysiloxane. Meanwhile, if the polymerization degree of the first organopolysiloxane is below the range, the viscosity of the prepared polyester-modified silicone resin may be too low, resulting in poor handling properties, and if exceeds the range, the viscosity of the prepared polyester-modified silicone resin may be too high, resulting in poor handling properties.

## Polyester-Modified Silicone Resin

In addition, the polyester-modified silicone resin according to the present invention is prepared from the polyester-modified silicone resin composition described above and has an aryl group content of 50 mol% or less.

Specifically, the aryl group content in the polyester-modified silicone resin may be 5 mol% to 50 mol%, 8 mol% to 40 mol%, or 30 mol% to 35 mol%. In this case, the 'aryl group' in the "aryl group content" may be a phenyl group.

It is known that the aryl group in the silicone resin causes a yellowing phenomenon in which the manufactured cured product turns yellow at high temperatures. On the other hand, the polyester-modified silicone resin according to the present invention has an advantage in that the yellowing phenomenon described above is prevented, because the aryl group content is low. Specifically, when the aryl group content in the silicone resin exceeds the above range, the manufactured cured product may become unsuitable for use, because an optical component and/or an encapsulant may discolor at high temperatures.

The polyester-modified silicone resin may have a viscosity at 60°C of 1,000 to 100,000 mPa·s, 2,000 to 90,000 mPa·s, or 50,000 to 85,000 mPa·s. When the viscosity at 60°C of the polyester-modified silicone resin is within the range, the viscosity of the encapsulant containing same is appropriate, thereby providing an effect of easy handling. On the other hand, when the viscosity of the polyester-modified silicone resin at 60°C is lower than the range, the viscosity of the encapsulant containing same is too low, which may cause a problem of flowing, and when exceeds the range, the high viscosity of the encapsulant containing same may result in reduced handleability.

In addition, the polyester-modified silicone resin may have a weight average molecular weight (Mw) of 1,000 to 500,000 g/mol, 2,000 to 150,000 g/mol, or 50,000 to 100,000 g/mol. When the weight average molecular weight of the polyester-modified silicone resin is within the range, the viscosity of the encapsulant containing same is appropriate, thereby facilitating handling. On the other hand, when the weight average molecular weight of the polyester-modified silicone resin is less than the range, the encapsulant containing same may flow out before curing formation, and when exceeds the range, the viscosity of the encapsulant containing same may be high, thereby deteriorating handling.

The polyester-modified silicone resin may include an alkenyl group. Specifically, the alkenyl group content in the polyester-modified silicone resin may be 1 to 30 mol%, 5 to 25 mol%, or 5 to 10 mol%. In this time, the 'alkenyl group' in the "alkenyl group content" may be a vinyl group. When the alkenyl group content in the polyester-modified silicone resin is within the range, the encapsulant containing same has an effect of having appropriate hardness after curing. On the other hand, when the content of alkenyl group in the polyester-modified silicone resin is below the range, there is a problem that the curing performance of the encapsulant containing same is lowered, and when exceeds the range, the encapsulant containing same may become sticky.

The polyester-modified silicone resin according to the present invention as described above has excellent adhesion to a substrate and excellent durability due to a low aryl group content, thereby preventing the problem of yellowing. In addition, a cured product manufactured from a composition containing the silicone resin has excellent hardness and transmittance and is thus very suitable as an optical component and/or an encapsulant.

## Silicone Composition for Encapsulant

Furthermore, the silicone composition for an encapsulant according to the present invention includes: (A) a second organopolysiloxane; (B) an organohydrogenpolysiloxane; (C) the polyester-modified silicone resin described above; and (D) silica.

### (A) Second Organopolysiloxane

The second organopolysiloxane serves to impart elasticity to a manufactured coating film. The second organopolysiloxane may be the same as or different from the first organopolysiloxane, and the description of the first organopolysiloxane may be cited.

The second organopolysiloxane has at least two silicon atom-bonded alkenyl groups (Si-alkenyl) per molecule.

For example, the alkenyl group content in the second organopolysiloxane may be 0.1 to 4 mmol/g, or 0.2 to 3 mmol/g. In this case, in the "alkenyl group content", the 'alkenyl group' may be a vinyl group. In addition, the alkenyl group may be a silicon atom-bonded alkenyl group. When the alkenyl group content in the second organopolysiloxane is within the range, the mechanical properties such as hardness and strength of the manufactured cured product may be improved. In addition, when the alkenyl group content in the second organopolysiloxane is less than the range, the cured product manufactured using the organopolysiloxane having an insufficient content of the alkenyl group has low strength properties, which may result in a reduced sealing ability of the cured product. When the alkenyl group content in the second organopolysiloxane exceeds the range, the crosslinking density of the cured product increases more than necessary, and thus the curing performance may be improved, but the hardness of the cured product manufactured may increase excessively due to the high crosslinking density, thereby deteriorating physical properties such as tensile strength and elongation, and deteriorating performance as an encapsulant.

The polymerization degree of the second organopolysiloxane may be 5 to 3,000, 5 to 2,000, or 6 to 100. When the polymerization degree of the second organopolysiloxane is within the range, there is an advantage of increasing the tensile strength of the cured product. In this case, the polymerization degree is the number of silicon atoms in one molecule of the second organopolysiloxane. In addition, when the polymerization degree of the second organopolysiloxane is less than the range, the crosslinking density of the cured product manufactured using same may be insufficient, making it difficult to achieve appropriate hardness, and also may be insufficient in elasticity, making it difficult to achieve sufficient sealing capability. Meanwhile, if the polymerization degree of the second organopolysiloxane exceeds the range, the viscosity of the silicone composition may be formed excessively high, thereby reducing workability.

In addition, the second organopolysiloxane may have a viscosity at 25°C of 500 to 500,000 mPa·s, 1,000 to 200,000 mPa·s, or 5,000 to 50,000 mPa·s. If the viscosity at 25°C of the second organopolysiloxane is within the range, the viscosity of the silicone composition is appropriately formed, thereby providing an excellent effect of injection workability. In addition, if the viscosity of the second organopolysiloxane at 25°C is less than the range, the viscosity of the silicone composition may be reduced, thereby generating a large amount of flash during injection, and it may be difficult to improve the tensile strength and elongation of the cured product. In addition, if the viscosity of the second organopolysiloxane at 25°C exceeds the range, uniform dispersion of silica in the silicone composition may become difficult, thereby reducing storage stability, reducing injection workability or placing excessive load on manufacturing equipment.

(B) Organohydrogenpolysiloxane

The organohydrogenpolysiloxane is a material that crosslinks with the second organopolysiloxane to form a cured product, and may serve as a crosslinking agent.

The organohydrogenpolysiloxane includes a Si-H bond, and most of the Si-H bonds detected in the silicone composition are derived from the organohydrogenpolysiloxane. Specifically, at least one Si-H bond may be included per molecule of the organohydrogenpolysiloxane. Meanwhile, the organohydrogenpolysiloxane may not include an alkenyl group.

For example, the organohydrogenpolysiloxane may be represented by Formula 2 below.

$$[\text{Formula 2}] \qquad (R^{15}SiO_{3/2})_i(R^{16}R^{17}HSiO_{1/2})_j$$

In Formula 2,

$R^{15}$ is a substituted or unsubstituted $C_{1-6}$ alkyl group or a $C_{6-15}$ aryl group,
$R^{16}$ and $R^{17}$ are each independently a substituted or unsubstituted $C_{1-10}$ alkyl group, and
i and j are mole fractions of each unit, where i+j is 1.

For example, i may be 0.01 to 0.5, and j may be 0.5 to 0.99.

For example, $R^{15}$ may be a substituted or unsubstituted $C_{6-12}$ aryl group, more specifically, a phenyl group, a tolyl group, or a xylyl group, preferably a phenyl group.

Specifically, $R^{16}$ and $R^{17}$ may each independently be a substituted or unsubstituted $C_{1-6}$ alkyl group, more specifically, a methyl group, an ethyl group or a butyl group, preferably a methyl group. In this case, the alkyl group may be linear or branched.

The content of Si-H in the organohydrogenpolysiloxane may be 0.1 to 4 mmol/g, or 0.2 to 0.3 mmol/g. When the content of hydrogen groups (Si-H) directly bonded to silicon of the organohydrogenpolysiloxane is within the range, the crosslinking density of the manufactured cured product may be appropriately controlled, so that the physical properties may be easily improved. If the content of hydrogen groups (Si-H) directly bonded to silicon of the organohydrogenpolysiloxane is less than the range, the crosslinking density of the manufactured cured product may be low, making it difficult to achieve the target hardness and mechanical strength, and if exceeds the range, the control of the crosslinking density of the manufactured cured product may be difficult, resulting in reduced elasticity or inability to achieve the desired mechanical strength.

In addition, the viscosity of the organohydrogenpolysiloxane at 25°C may be 1 to 50,000 mPa·s, 1 to 30,000 mPa·s, or 1 to 20,000 mPa·s. If the viscosity of the organohydrogenpolysiloxane at 25°C is less than the range, the crosslinking density of the manufactured cured product may excessively increase, resulting in reduced mechanical properties such as tensile strength and elongation, and if exceeds the range, the elasticity of the cured product may be reduced, making the sealing durability reduced.

Meanwhile, the molar ratio of the Si-H bond to the alkenyl group in the silicone composition may be 0.5 to 1.2, preferably 0.6 to 1.0, and more preferably 0.7 to 0.9. In this case, the alkenyl group may be a vinyl group. In addition, when the molar ratio of the Si-H bond to the alkenyl group in the silicone composition is less than the range, the compressive strain of the cured product increases as a large amount of unreacted alkenyl groups derived from the second organopolysiloxane remain, which is not preferable, and when exceeds the range, the hardness and elasticity of the cured product may decrease as unreacted Si-H derived from the organohydrogenpolysiloxane remains, which may ultimately result in a decrease in the sealing durability.

(C) Polyester-modified Silicone Resin

The polyester-modified silicone resin improves the adhesion to the substrate and minimizes the problem of the manufactured cured product yellowing at high temperatures.

In addition, the content of the polyester-modified silicone resin may be 10 parts by weight to 45 parts by weight based on 100 parts by weight of the silicone composition, preferably 10 parts by weight to 30 parts by weight. When the content of the polyester-modified silicone resin is within the range, the cured product manufactured from the silicone composition containing same has excellent adhesion to the substrate and has the effect of minimizing yellowing at high temperatures. When the content of the polyester-modified silicone resin is less than the range, the adhesion of the manufactured cured product may be insufficient, or yellowing may occur, and when exceeds the range, the manufactured cured product may become sticky or have excessively high hardness.

(D) Silica

Silica improves the mechanical strength and hardness of the cured product.

The silica is not particularly limited as long as it is generally applicable to the silicone composition, and may be, for example, amorphous or crystalline.

In addition, the silica may be fumed, wet, dry, pyrogenic or calcined silica.

The silica may have a BET specific surface area of 50 to 400 $m^2$/g, 100 to 400 $m^2$/g, or 200 to 300 $m^2$/g. If the BET specific surface area of the silica is less than the range, there is a problem that the mechanical properties of the manufactured cured product, such as hardness and tensile strength, which are effects due to the addition of silica, are not sufficiently improved, and if exceeds the range, dispersion of the silica in the composition is not easy, the hardness of the manufactured cured product may be poor, and problems may occur in storage stability, such as an increase in the viscosity of the composition over time.

In addition, the silica may have an average particle diameter of 0.001 to 1 $\mu$m, 0.005 to 0.1 $\mu$m, or 0.007 to 0.03 $\mu$m. When the average particle diameter of the silica is less than the range, the dispersion time of the silica in the composition may increase, which may lower the productivity and storage stability of the composition, and when exceeds the range, the reinforcing effect of the cured product due to the silica may be insignificant, making it difficult to achieve the desired hardness and other properties.

The silica may be included in an amount of 1 to 10 parts by weight, or 3 to 7 parts by weight, based on 100 parts by weight of the silicone composition. When the content of the silica is less than the range, the mechanical properties of the manufactured cured product, such as hardness and tensile strength, and the acid resistance improvement effect due to the addition of the silica may be insignificant, and when exceeds the range, the compression strain of the cured product may increase or the sealing property may be deteriorated due to the excessive amount of silica.

(E) Additive

The silicone composition for an encapsulant may additionally include additives commonly used in the art. In this case, the additives may be, for example, surfactants, catalysts, curing retardants, adhesive agents, or the like.

The viscosity of the silicone composition for an encapsulant at 25°C may be 15,000 to 22,000 mPa·s, 16,000 to 21,000 mPa·s, or 18,000 to 20,000 mPa·s.

In addition, the silicone composition for an encapsulant may have a ratio of the viscosity at 25°C measured at a shear rate of 1 $s^{-1}$ to the viscosity at 25°C measured at a shear rate of 10 $s^{-1}$ of 1.5:1 to 3.3:1, 2.0:1 to 3.0:1.0, or 2.4:1 to 2.8:1.0.

The silicone composition for an encapsulant according to the present invention as described above has excellent adhesion to a substrate, and the hardness and transmittance of the cured product produced therefrom are excellent, making it very suitable as an optical component and/or an encapsulant.

**Cured Product**

The cured product according to the present invention is manufactured by curing the silicone composition for an encapsulant.

The cured product having an average thickness of 6 mm may have a hardness of 30 to 40 shore A, or 30 to 36 shore A.

The cured product having an average thickness of 1 mm may have a maximum stress of 3.5 MPa or more, 4.0 MPa or more, or 4.0 to 5.0 MPa.

The cured product as described above has excellent transparency and hardness and excellent adhesion, making it suitable as a material for sensitive fields such as electrical and electronic fields.

Hereinafter, the present invention will be described in more detail through examples. However, the examples are only for helping the understanding of the present invention, and the scope of the present invention is not limited to the examples in any sense.

## MODE FOR CARRYING OUT THE INVENTION

### [Example 1]

### Preparation Example 1. Preparation of Polyester Polyol

To a four-necked flask equipped with a thermometer, a stirrer, a condenser, a packed column, and a separating column, 48.4 parts by weight of 1,4-cyclohexane dimethanol (CHDM), 35.8 parts by weight of tetrahydrophthalic anhydride (THPAN), and 0.02 parts by weight of monobutyltin dihydroxychloride as a catalyst were added, and the temperature was raised to 180°C under a nitrogen atmosphere and maintained for 2 hours. After that, the temperature was raised from 180°C to 220°C over 3 hours, while removing condensed water, and then cooled to 160°C. After that, 2.53 parts by weight of xylene was added at 160°C and refluxed for 5 hours. Then, the temperature was cooled to 100°C, and 17.44 parts by weight of xylene was added to prepare a polyester polyol.

The prepared polyester polyol had a hydroxyl value (OHv) of 140 mgKOH/g, a viscosity at 25°C of 4,500 mPa·s, a number average molecular weight (Mn) of 898 g/mol, a glass transition temperature (Tg) of 10°C, and a refractive index (R.I.) of 1.493.

### Preparation Example 2. Preparation of Organopolysiloxane-1

To a four-necked flask equipped with a thermometer, a stirring device, a condenser, a packed column, and a separating column, 11.4 parts by weight of 1,1,3,3-tetramethyl-1,3-diviniyldisiloxane, 9.6 parts by weight of hexamethyldisiloxane, and 17.2 parts by weight of methylphenylcyclosiloxane were added, and 6.6 parts by weight of water was additionally added, and then stirred. After that, 0.06 parts by weight of trifluoromethane sulfonic acid was added, 26.7 parts by weight of phenyltrimethoxysilane was added over 30 minutes, and the temperature was raised to 60°C and maintained for 2 hours. After that, the temperature was raised to 80°C and maintained for 3 hours. 2.0 parts by weight of $CaCO_3$ was added thereto for neutralization, maintained for 30 minutes, and then cooled to room temperature. Then, 26.44 parts by weight of xylene was added for filtration and stirred for 30 minutes to dilute. Then, filtration was conducted through a cartridge filter, the filtrate was placed in a four-necked flask equipped with a thermometer, a stirrer, a condenser, a packed column, and a separating column, and the temperature was raised to 150°C while conducting reduced pressure distillation, maintained for 2 hours, cooled to room temperature, and filtered through a mesh filter to prepare organopolysiloxane-1.

The prepared organopolysiloxane-1 had the methoxy group content of 2.3 mol%, the vinyl group content of 9.38 mol%, the phenyl group content of 22.3 mol%, and the polymerization degree of 8. In addition, from the $^{29}$Si-NMR analysis results, 13 mol% of $SiO_{1/2}(CH_3)_3$ units (hereinafter referred to as $M^{me}$), 17.9 mol% of $SiO_{1/2}Vi(CH_3)_2$ units (hereinafter referred to as $M^{Vi}$), 29.1 mol% of $SiO_{3/2}Ph$ units (hereinafter referred to as $T^{Ph}$), and 40 mol% of $SiO_{2/2}(CH_3)Ph$ units (hereinafter referred to as $D^{mePh}$). Here, Vi is a vinyl group, and Ph is a phenyl group.

### Preparation Example 3. Preparation of Polyester-modified Silicone Resin-1

To a four-necked flask equipped with a thermometer, a stirrer, a condenser, a packed column, and a separating column, 10 parts by weight of the polyester polyol prepared in Preparation Example 1, 100 parts by weight of the organopolysiloxane-1 prepared in Preparation Example 2, and 0.02 parts by weight of tetraisopropyl titanate as a catalyst were added, and the temperature was raised to 160°C and maintained at 160°C for 5 hours. After cooling to 90°C, 110 parts by weight of xylene, 0.02 parts by weight of potassium hydroxide (KOH), and 2.2 parts by weight of distilled water were added, and the temperature was raised to 150°C and maintained for 1 hour. Then, water and methanol (product) were removed using Dean Stark. After cooling to 90°C, 2.2 parts by weight of water was added, the temperature was raised to 150°C and maintained for 1 hour, and then water and methanol were removed in the same manner as above. After cooling to room temperature, 2.2 parts by weight of ethylene chlorohydrin was added for neutralization, stirred for 10 hours, and filtered to prepare polyester-modified silicone resin-1.

The prepared polyester-modified silicone resin-1 had the methoxy content of 0.2 mol%, a viscosity at 60°C of 80,000 mPa·s, the vinyl group content of 6.55 mol%, the phenyl group content of 32.1 mol%, and a weight average molecular weight of 80,000 g/mol. In addition, from the $^{29}$Si-NMR analysis results, the resin was composed of 13.4 mol% of $SiO_{1/2}(CH_3)_3$ units, 13.6 mol% of $SiO_{1/2}(CH_3)_2Vi$ units, 34.5 mol% of $SiO_{2/2}(CH_3)Ph$ units, and 29.1 mol% of $SiO_{3/2}Ph$ units. Here, Vi is a vinyl group, and Ph is a phenyl group.

**Preparation Example 4. Preparation of Polyester-modified Silicone Resin-2**

Polyester-modified silicone resin-2 was prepared in the same manner as Preparation Example 3 except for using organopolysiloxane-2 containing Q units (containing 15 mol% of $M^{me}$, 15 mol% of $M^{Vi}$, 30 mol% of $T^{Ph}$, 25 mol% of $D^{mePh}$, and 15 mol% of $SiO_{4/2}$ unit (hereinafter referred to as Q) and having the methoxy group content of 2.2 mol%) instead of the organopolysiloxane-1 of Preparation Example 2.

The prepared polyester-modified silicone resin-2 had the methoxy content of 0.22 mol%, a viscosity at 60°C of 90,000 mPa·s, the vinyl group content of 8.0 mol%, the phenyl group content of 22.7 mol%, and a weight average molecular weight of 150,000 g/mol. In addition, from the $^{29}$Si-NMR analysis results, the resin was composed of 13.6 mol% of $SiO_{1/2}(CH_3)_3$ units, 14.0 mol% of $SiO_{1/2}(CH_3)_2Vi$ units, 22.7 mol% of $SiO_{2/2}(CH_3)Ph$ units, 27.3 mol% of $SiO_{3/2}Ph$ units, and 13.6 mol% of $SiO_{4/2}$ units. Here, Vi is a vinyl group, and Ph is a phenyl group.

**Preparation Example 5. Preparation of Polyester-modified Silicone Resin-3**

Polyester-modified silicone resin-3 was prepared in the same manner as Preparation Example 3 except for using organopolysiloxane-3 with a low phenyl group content (containing 45 mol% of $M^{me}$, 18 mol% of $M^{Vi}$, 10 mol% of $T^{Ph}$, and 27 mol% of $D^{mePh}$, and having the phenyl group content of 10 mol%) instead of the organopolysiloxane-1 of Preparation Example 2.

The prepared polyester-modified silicone resin-3 had the methoxy content of 0.21 mol%, a viscosity of 60,000 mPa·s at 60°C, the vinyl group content of 11.0 mol%, the phenyl group content of 9.1 mol%, and a weight average molecular weight of 150,000 g/mol. In addition, the $^{29}$Si-NMR analysis results are shown in Table 4 below.

**Preparation Example 6. Preparation of Polyester-modified Silicone Resin-4**

Polyester-modified silicone resin-4 was prepared in the same manner as Preparation Example 3 except for using 5 parts by weight of the polyester polyol prepared in Preparation Example 1 and 100 parts by weight of the organopolysiloxane-1 prepared in Preparation Example 2.

The prepared polyester-modified silicone resin-4 had the methoxy content of 0.015 mol%, a viscosity of 120,000 mPa·s at 60°C, the vinyl group content of 6.8 mol%, the phenyl group content of 33.6 mol%, and a weight average molecular weight of 75,000 g/mol. In addition, the $^{29}$Si-NMR analysis results are shown in Table 4 below.

**Preparation Example 7. Preparation of Polyester-modified Silicone Resin-5**

Polyester-modified silicone resin-5 was prepared in the same manner as Preparation Example 3 except for using 30 parts by weight of the polyester polyol prepared in Preparation Example 1 and 100 parts by weight of the organopolysiloxane-1 prepared in Preparation Example 2.

The prepared polyester-modified silicone resin-5 had the methoxy content of 0.07 mol%, a viscosity of 50,000 mPa·s at 60°C, the vinyl group content of 5.5 mol%, the phenyl group content of 27.2 mol%, and a weight average molecular weight of 100,000 g/mol. In addition, the $^{29}$Si-NMR analysis results are shown in Table 4 below.

**Preparation Example 8. Preparation of Polyester-modified Silicone Resin-6**

Polyester-modified silicone resin-6 was prepared in the same manner as Preparation Example 3 except for using organopolysiloxane-4 with a high M unit content and no D unit ($M^{me}$ 35 mol%, $M^{Vi}$ 20 mol%, and $T^{Ph}$ 45 mol%) instead of the organopolysiloxane-1 of Preparation Example 2.

The prepared polyester-modified silicone resin-6 had the methoxy content of 0.22 mol%, a viscosity of 80,000 mPa·s at 60°C, the vinyl group content of 9.18 mol%, the phenyl group content of 20.6 mol%, and a weight average molecular weight of 150,000 g/mol. In addition, the results of the $^{29}$Si-NMR analysis are shown in Table 4 below.

**Experimental Examples 1 to 16. Preparation of Silicone Compositions**

Silicone compositions were prepared by mixing the components in the compositions described in Tables 1 to 3.

[Table 1]

| Component (parts by weight) | Experimental Example 1 | Experimental Example 2 | Experimental Example 3 | Experimental Example 4 | Experimental Example 5 | Experimental Example 6 |
|---|---|---|---|---|---|---|
| (A) Organopolysiloxane-1 | | | 20.9 | 20.9 | | |
| (A) Organopolysiloxane-2 | 20.9 | 20.9 | | | 20.9 | 20.9 |
| (A) Organopolysiloxane-3 | 36.8 | 36.8 | 36.8 | 36.8 | 36.8 | 36.8 |
| (A) Organopolysiloxane-4 | 13.5 | | 13.5 | | 13.5 | 13.5 |
| (B) Organohydrogenpolys iloxane | 7.4 | 7.4 | 7.4 | 7.4 | 7.4 | 7.4 |
| Silica | 6.5 | 6.5 | 6.5 | 6.5 | 6.5 | 6.5 |
| Nonionic surfactant | 0.5 | 0.5 | 0.5 | 0.5 | 0.5 | 0.5 |
| Adhesive agent | 0.4 | 0.4 | 0.4 | 0.4 | 0.4 | 0.4 |
| Catalyst | 0.01 | 0.01 | 0.01 | 0.01 | 0.01 | 0.01 |
| Curing retardant | 0.49 | 0.49 | 0.49 | 0.49 | 0.49 | 0.49 |
| (C) Polyester-modified resin-1 | 13.5 | 27 | 13.5 | 27 | | |
| (C) Polyester-modified resin-2 | | | | | 13.5 | |
| (C) Polyester-modified resin-3 | | | | | | 13.5 |
| (C) Polyester-modified resin-4 | | | | | | |
| (C) Polyester-modified resin-5 | | | | | | |
| (C) Polyester-modified resin-6 | | | | | | |
| Total amount | 100 | 100 | 100 | 100 | 100 | 100 |
| Weight of organopolysiloxane-3/(weight of organopolysiloxane-1 or 2) | 1.76 | 1.76 | 1.76 | 1.76 | 1.76 | 1.76 |
| (mole number of Si-H)/(mole number of vinyl groups) in silicone composition | 0.863 | 0.883 | 0.837 | 0.843 | 0.863 | 0.863 |

[Table 2]

| Component (parts by weight) | Experimental Example 7 | Experimental Example 8 | Experimental Example 9 | Experimental Example 10 | Experimental Example 11 |
|---|---|---|---|---|---|
| (A) Organopolysiloxane-1 | | | | | |
| (A) Organopolysiloxane-2 | 24.9 | 2.9 | 10.9 | 20.9 | 20.9 |
| (A) Organopolysiloxane-3 | 41.3 | 18.3 | 46.8 | 36.8 | 36.8 |
| (A) Organopolysiloxane-4 | 13.5 | 13.5 | 13.5 | 13.5 | 13.5 |
| (B) Organohydrogenpolysiloxane | 7.4 | 7.4 | 7.4 | 7.4 | 7.4 |
| Silica | 6.5 | 6.5 | 6.5 | 6.5 | 6.5 |
| Nonionic surfactant | 0.5 | 0.5 | 0.5 | 0.5 | 0.5 |

(continued)

| Component (parts by weight) | Experi mental Exampl e 7 | Experi mental Exampl e 8 | Experi mental Exampl e 9 | Experi mental Exampl e 10 | Experi mental Exampl e 11 |
|---|---|---|---|---|---|
| Adhesive agent | 0.4 | 0.4 | 0.4 | 0.4 | 0.4 |
| Catalyst | 0.01 | 0.01 | 0.01 | 0.01 | 0.01 |
| Curing retardant | 0.49 | 0.49 | 0.49 | 0.49 | 0.49 |
| (C) Polyester-modified silicone resin-1 | 5 | 50 | 13.5 | | |
| (C) Polyester-modified silicone resin-2 | | | | | |
| (C) Polyester-modified silicone resin-3 | | | | | |
| (C) Polyester-modified silicone resin-4 | | | | 13.5 | |
| (C) Polyester-modified silicone resin-5 | | | | | 13.5 |
| (C) Polyester-modified silicone resin-6 | | | | | |
| Total amount | 100 | 100 | 100 | 100 | 100 |
| Weight of organopolysiloxane-3/(Weight of organopolysiloxane-1 or 2) | 1.66 | 2.19 | 4.29 | 1.76 | 1.76 |
| (mole number of Si-H)/(mole number of vinyl groups) in silicone composition | 0.863 | 0.883 | 0.259 | 0.863 | 0.863 |

[Table 3]

| Component (parts by weight) | Experi mental Exampl e 12 | Experi mental Exampl e 13 | Experi mental Exampl e 14 | Experi mental Exampl e 15 |
|---|---|---|---|---|
| (A) Organopolysiloxane-1 | | | 20.9 | |
| (A) Organopolysiloxane-2 | 20.9 | 20.9 | | 23.9 |
| (A) Organopolysiloxane-3 | 36.8 | 36.8 | 36.8 | 40.3 |
| (A) Organopolysiloxane-4 | 13.5 | 27 | 27 | 13.5 |
| (B) Organohydrogenpolysiloxane | 7.4 | 7.4 | 7.4 | 7.4 |
| Silica | 6.5 | 6.5 | 6.5 | - |
| Nonionic surfactant | 0.5 | 0.5 | 0.5 | 0.5 |
| Adhesive agent | 0.4 | 0.4 | 0.4 | 0.4 |
| Catalyst | 0.01 | 0.01 | 0.01 | 0.01 |
| Curing retardant | 0.49 | 0.49 | 0.49 | 0.49 |
| (C) Polyester-modified silicone resin-1 | 13.5 | | | 13.5 |
| (C) Polyester-modified silicone resin-2 | | | | |
| (C) Polyester-modified silicone resin-3 | | | | |
| (C) Polyester-modified silicone resin-4 | | | | |
| (C) Polyester-modified silicone resin-5 | | | | |
| (C) Polyester-modified silicone resin-6 | 13.5 | | | |
| Total amount | 100 | 100 | 100 | 100 |
| Weight of organopolysiloxane-3/(Weight of organopolysiloxane-1 or 2) | 1.76 | 1.76 | 1.76 | 1.69 |

(continued)

| Component (parts by weight) | Experi mental Exampl e 12 | Experi mental Exampl e 13 | Experi mental Exampl e 14 | Experi mental Exampl e 15 |
|---|---|---|---|---|
| (mole number of Si-H)/(mole number of vinyl groups) in silicone composition | 0.863 | 0.863 | 0.863 | 0.863 |

In Tables 1 to 3 above, organopolysiloxane-1, 2, 3 and 4 are the same as the organopolysiloxanes described in Preparation Examples 2, 4, 5 and 8, respectively, and polyester-modified silicone resins-1 to 6 are prepared in Preparation Examples 3 to 8, respectively.

The manufacturers and product names, or material names of each component used in the other experimental examples are shown in Table 4, and (B) the viscosity of organohydrogenpolysiloxane at 25°C is the value measured by a rheometer.

[Table 4]

| Component | Physical properties, structure or compound name |
|---|---|
| (C) Polyester-modified silicone resin-1 | $M^{Vi}$ 15.0 mol%, $M^{me}$ 14.8 mol%, $D^{MePh}$ 38.1 mol%, $T^{Ph}$ 32.1 mol% (phenyl group content: 32.1 mol%, vinyl group content: 6.55 mol%) |
| (C) Polyester-modified silicone resin-2 | $M^{Vi}$ 15.4 mol%, $M^{me}$ 14.9 mol%, $D^{MePh}$ 24.9 mol%, $T^{Ph}$ 29.9 mol%, Q 14.9 mol% (phenyl group content: 22.7 mol%, vinyl group content: 8.0 mol%) |
| (C) Polyester-modified silicone resin-3 | $M^{Vi}$ 29.8 mol%, $M^{me}$ 30.1 mol%, $D^{MePh}$ 30.1 mol%, $T^{Ph}$ 10.0 mol% (phenyl group content: 9.1 mol%, vinyl group content: 11.0 mol%) |
| (C) Polyester-modified silicone resin-4 | $M^{Vi}$ 14.8 mol%, $M^{me}$ 15.1 mol%, $D^{MePh}$ 38.1 mol%, $T^{Ph}$ 32.0 mol% (phenyl group content: 33.6 mol%, vinyl group content: 6.8 mol%) |
| (C) Polyester-modified silicone resin-5 | $M^{Vi}$ 15.0 mol%, $M^{me}$ 14.8 mol%, $D^{MePh}$ 38.1 mol%, $T^{Ph}$ 32.1 mol% (phenyl group content: 27.2 mol%, vinyl group content: 5.5 mol%) |
| (C) Polyester-modified silicone resin-6 | $M^{Vi}$ 20.2 mol%, $M^{me}$ 35.3 mol%, $T^{Ph}$ 44.5 mol% (phenyl group content: 20.6 mol%, vinyl group content: 9.18 mol%) |
| (B) Organohydrogenpoly siloxane | $M^{H}(SiO_{1/2}H(CH_3)_2)$ 75 mol% $T^{Ph}$ 25 mol% (refractive index for wavelength 589 nm: 1.44, phenyl group content: 14.3 mol%, vinyl group content: 0 mol%, viscosity at 25°C: 10 mPa·s) |
| Silica | Fumed silica (BET specific surface area: 200 $m^2/g$) |
| Nonionic surfactant | Polypropylene glycol (weight average molecular weight: 2,000 g/mol) |
| Adhesive agent | 2-(3,4-epoxycyclohexyl)ethyl trimethoxysilane |
| Catalyst | manufacturer: HERAEUS PRECIOUS METALS NA, LLC, product name: Platinum divinyltetramethyldisiloxane in vinyl polymer solution (platinum 1,3-diethenyl-1,1,3,3-tetramethyldisiloxane complexes) |
| Curing retardant | 1-Ethynylcyclohexanol |

**Test Example: Characteristic Evaluation**

The physical properties of the silicone compositions of the Experimental Examples and the cured products manufactured therefrom were measured by the following method, and the results are shown in Table 5.

Specifically, the silicone compositions of the Examples or Comparative Examples were cured at a temperature of 190°C for 10 minutes using a mold capable of molding to a thickness of 1 mm or 60 mm to manufacture cured products.

(1) Viscosity and Thixotropic Index

The viscosity of the composition at a shear rate of 1/s or 10/s at 25°C was measured using a rheometer (model name: MCR301) from Anton Paar. The thixotropic index was then calculated using the following formula.

Thixotropic index = (viscosity at a shear rate of 1/s)/(viscosity at a shear rate of 10/s)

In addition, the viscosity in Table 5 is a viscosity measured at 25°C.

(2) Hardness

The hardness was measured at 25°C using a Shore D type hardness tester (ASKER TYPE D from KOBUNSHI, KEIKI) for a cured product with a thickness of 6 mm.

(3) Transmittance

The transmittance for light with a wavelength of 450nm was measured using a spectrophotometer (U-3900H from HITACHI) for a cured product with a thickness of 1 mm.

(4) Adhesion (maximum stress)

The silicone composition was applied between two PCB substrates so that the width was 10 mm, the length was 5 mm, and the height was 1 mm, and was cured at 150°C for 30 minutes. After that, the adhesion was measured by pulling the two PCB substrates from both sides using a universal testing machine (UTM) and measuring the maximum stress at which the silicone cured product breaks from the PCB substrate.

(5) Yellowing of Cured Product

The silicone composition was cured at 150°C for 30 minutes to a width of 30 mm, a length of 30 mm, and a height of 2 mm. The degree of discoloration (APHA color) of the cured specimen was measured.

(6) Stickiness of Cured Product

The silicone composition was cured at 150°C for 30 minutes to a width of 30 mm, a length of 30 mm, and a height of 2 mm. After that, the surface of the cured product was wiped once using a cotton cloth, and then the surface of the cured product was visually checked to see if there were any scratches or cotton attached to the cured product.

[Table 5]

| | Viscosity (mPa·s) | Thixotropic index | Hardness (Shore D) | Transmittance (%) | Adhesion (MPa) | Yellowing | Stickiness |
|---|---|---|---|---|---|---|---|
| Experimental Example 1 | 19,700 | 2.6 | 35 | 88.9 | 4.45 | ◎ | ◎ |
| Experimental Example 2 | 19,800 | 2.7 | 34 | 89.4 | 4.55 | ◎ | ◎ |
| Experimental Example 3 | 17,500 | 2.7 | 32 | 87.8 | 4.2 | ◎ | ◎ |
| Experimental Example 4 | 17,200 | 2.7 | 31 | 88.5 | 4.3 | ◎ | ◎ |
| Experimental Example 5 | 20,000 | 2.6 | 35 | 87.8 | 3.4 | ○ | ○ |
| Experimental Example 6 | 17,600 | 2.6 | 34 | 87.2 | 3.4 | ○ | ○ |
| Experimental Example 7 | 17,000 | 2.6 | 29 | 88.7 | 3.5 | ○ | ○ |
| Experimental Example 8 | 21,300 | 2.7 | 35 | 79.1 | 3.7 | ○ | ○ |
| Experimental Example 9 | 19,800 | 2.6 | 34 | 88.9 | 3.4 | ○ | Δ |
| Experimental Example 10 | 20,300 | 2.7 | 29 | 89 | 2.9 | Δ | ○ |
| Experimental Example 11 | 17,100 | 2.7 | 28 | 88.7 | 2.9 | ○ | ○ |
| Experimental Example 12 | 17,600 | 2.6 | 31 | 86.7 | 3.1 | ○ | ○ |
| Experimental Example 13 | 16,800 | 2.6 | 24 | 88.7 | 2.9 | X | Δ |
| Experimental Example 14 | 15,900 | 2.6 | 25 | 89.2 | 3.1 | X | Δ |
| Experimental Example 15 | 12,300 | 1.3 | 25 | 92.1 | 2.5 | Δ | Δ |

As shown in Table 5, Experimental Examples 1 to 4 showed excellent workability, because the viscosity and thixotropic index of the silicone composition were appropriate, and the cured products thereof had appropriate hardness and transmittance and excellent adhesion, so as to be applied as encapsulants for electronic and electrical components.

On the other hand, Experimental Example 5 including the polyester-modified silicone resin-2 prepared using the organopolysiloxane-2 containing Q units, Experimental Example 6 including the polyester-modified silicone resin-3 prepared using the organopolysiloxane-3 having a low phenyl group content, Experimental Example 9 having a molar ratio of Si-H bonds to alkenyl groups in the silicone composition of less than 0.5, and Experimental Example 12 including the polyester-modified silicone resin-6 prepared using the organopolysiloxane-4 having a high M unit content had insufficient adhesion in the cured products, so as not to be applied as encapsulants.

In addition, Experimental Example 7 including a polyester-modified silicone resin below the standard value, Experimental Example 10 using a small amount of polyester polyol when preparing a polyester-modified silicone resin, and Experimental Example 11 using an excessive amount had insufficient hardness of the cured products. In particular, Experimental Examples 10 and 11 also had insufficient adhesion.

Experimental Example 8 including an excessive amount of a polyester-modified silicone resin had insufficient transmittance of the cured product.

In addition, Experimental Examples 13 and 14 not including a polyester-modified silicone resin had insufficient hardness and adhesion of the cured products and yellowing occurred, making it unsuitable as an encapsulant.

Experimental Example 15 not including silica had insufficient viscosity and thixotropic index of the silicone composition, resulting in insufficient workability, and the cured product thereof had insufficient hardness and yellowing, making it unsuitable as an encapsulant.

**Claims**

1. A polyester-modified silicone resin composition comprising a polyester polyol and a first organopolysiloxane,

    wherein the first organopolysiloxane comprises an aryl group and an alkoxy group, and comprises 1 to 40 mol% of an M unit represented by $(R^1_3SiO_{1/2})$, 20 to 80 mol% of a T unit represented by $(R^2SiO_{3/2})$, 1 to 60 mol% of a D unit represented by $(R^3_2SiO_{2/2})$, and 10 mol% or less of a Q unit represented by $(SiO_{4/2})$,
    $R^1$ is a substituted or unsubstituted alkyl group, a substituted or unsubstituted alkoxy group, or a substituted or unsubstituted alkenyl group,
    $R^2$ is a substituted or unsubstituted aryl group or a substituted or unsubstituted aralkyl group, and
    $R^3$ is a substituted or unsubstituted alkyl group, a substituted or unsubstituted alkoxy group, a substituted or unsubstituted aryl group, or a substituted or unsubstituted alkenyl group.

2. The polyester-modified silicone resin composition according to claim 1, comprising the polyester polyol and the first organopolysiloxane in a weight ratio of 0.02:1 to 0.3:1.

3. A polyester-modified silicone resin prepared from the polyester-modified silicon resin composition of claim 1 and having an aryl group content of 50 mol% or less.

4. The polyester-modified silicone resin according to claim 3, having a viscosity at 60°C of 1,000 to 100,000 mPa·s and a weight average molecular weight of 1,000 to 500,000 g/mol.

5. A silicon composition for an encapsulant, the composition comprising:

    (A) a second organopolysiloxane;
    (B) an organohydrogenpolysiloxane;
    (C) the polyester-modified silicone resin according to claim 3 or claim 4; and
    (D) silica,
    wherein the content of the polyester-modified silicone resin is 10 parts by weight to 45 parts by weight based on 100 parts by weight of the silicone composition, and
    the molar ratio of Si-H bonds to alkenyl groups in the silicone composition is 0.5 to 1.2.

## INTERNATIONAL SEARCH REPORT

| International application No. |
|---|
| **PCT/KR2024/007746** |

**A.    CLASSIFICATION OF SUBJECT MATTER**

**C08G 77/445**(2006.01)i; **C08L 83/04**(2006.01)i; **C08L 83/10**(2006.01)i; **C08G 77/20**(2006.01)i; **C08G 77/12**(2006.01)i; **C08K 3/36**(2006.01)i

According to International Patent Classification (IPC) or to both national classification and IPC

**B.    FIELDS SEARCHED**

Minimum documentation searched (classification system followed by classification symbols)

C08G 77/445(2006.01); C08G 63/91(2006.01); C08G 77/04(2006.01); C08G 77/18(2006.01); C08K 5/5415(2006.01); C08L 69/00(2006.01); C08L 71/12(2006.01); C08L 83/06(2006.01); C09D 167/00(2006.01); C09K 3/10(2006.01); H01L 33/56(2010.01); H05B 33/04(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 폴리에스테르 폴리올(polyester polyol), 오르가노폴리실록산(organopolysil oxane), 아릴기(aryl group), 알콕시기(alkoxy group), 폴리에스테르 변성 실리콘(polyester modified silicone), 밀봉제(sealant)

**C.    DOCUMENTS CONSIDERED TO BE RELEVANT**

| Category* | Citation of document, with indication, where appropriate, of the relevant passages | Relevant to claim No. |
|---|---|---|
| Y | KR 10-0417087 B1 (KOREA CHEMICAL CO., LTD.) 10 May 2004 (2004-05-10)<br>See paragraphs [0006], [0028]-[0030] and [0046]. | 1-5 |
| Y | KR 10-2012-0078614 A (CHEIL INDUSTRIES INC.) 10 July 2012 (2012-07-10)<br>See paragraph [0069]; and claims 1 and 4. | 1-5 |
| Y | KR 10-2017-0057330 A (DAICEL CORPORATION) 24 May 2017 (2017-05-24)<br>See paragraphs [0188], [0325] and [0326]; and claims 1 and 9. | 5 |
| A | JP 2001-200150 A (DOW CORNING TORAY SILICONE CO., LTD.) 24 July 2001 (2001-07-24)<br>See paragraphs [0004], [0007], [0008] and [0025]. | 1-5 |
| A | JP 2022-010421 A (MITSUBISHI CHEMICAL CORP.) 14 January 2022 (2022-01-14)<br>See paragraphs [0012]-[0073]. | 1-5 |

✓ Further documents are listed in the continuation of Box C.     ✓ See patent family annex.

| | |
|---|---|
| *    Special categories of cited documents: | "T"    later document published after the international filing date or priority date and not in conflict with the application but cited to understand the principle or theory underlying the invention |
| "A"    document defining the general state of the art which is not considered to be of particular relevance | |
| "D"    document cited by the applicant in the international application | "X"    document of particular relevance; the claimed invention cannot be considered novel or cannot be considered to involve an inventive step when the document is taken alone |
| "E"    earlier application or patent but published on or after the international filing date | |
| "L"    document which may throw doubts on priority claim(s) or which is cited to establish the publication date of another citation or other special reason (as specified) | "Y"    document of particular relevance; the claimed invention cannot be considered to involve an inventive step when the document is combined with one or more other such documents, such combination being obvious to a person skilled in the art |
| "O"    document referring to an oral disclosure, use, exhibition or other means | |
| "P"    document published prior to the international filing date but later than the priority date claimed | "&"    document member of the same patent family |

| Date of the actual completion of the international search | Date of mailing of the international search report |
|---|---|
| **11 September 2024** | **11 September 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT

International application No.

**PCT/KR2024/007746**

### C. DOCUMENTS CONSIDERED TO BE RELEVANT

| Category* | Citation of document, with indication, where appropriate, of the relevant passages | Relevant to claim No. |
|---|---|---|
| A | JP 2001-323152 A (ASAHI KASEI CORP.) 20 November 2001 (2001-11-20)<br>See paragraphs [0008] and [0019]-[0021]. | 1-5 |
| A | JP 2014-185293 A (MITSUBISHI CHEMICALS CORP.) 02 October 2014 (2014-10-02)<br>See paragraphs [0005], [0009], [0054] and [0061]; and claims 1 and 3. | 1-5 |

Form PCT/ISA/210 (second sheet) (July 2022)

**INTERNATIONAL SEARCH REPORT**
Information on patent family members

International application No.

**PCT/KR2024/007746**

| Patent document cited in search report | | | Publication date (day/month/year) | Patent family member(s) | | | Publication date (day/month/year) |
|---|---|---|---|---|---|---|---|
| KR | 10-0417087 | B1 | 10 May 2004 | KR | 10-1997-0042674 | A | 24 July 1997 |
| KR | 10-2012-0078614 | A | 10 July 2012 | CN | 102585512 | A | 18 July 2012 |
| | | | | DE | 102011057116 | A1 | 05 July 2012 |
| | | | | JP | 2012-140622 | A | 26 July 2012 |
| | | | | JP | 6300218 | B2 | 28 March 2018 |
| | | | | TW | 201231507 | A | 01 August 2012 |
| | | | | TW | I612080 | B | 21 January 2018 |
| | | | | US | 2012-0168780 | A1 | 05 July 2012 |
| | | | | US | 2014-0357792 | A1 | 04 December 2014 |
| | | | | US | 8847414 | B2 | 30 September 2014 |
| | | | | US | 9147626 | B2 | 29 September 2015 |
| KR | 10-2017-0057330 | A | 24 May 2017 | CN | 106715593 | A | 24 May 2017 |
| | | | | TW | 201631044 | A | 01 September 2016 |
| | | | | WO | 2016-043082 | A1 | 24 March 2016 |
| JP | 2001-200150 | A | 24 July 2001 | JP | 3439710 | B2 | 25 August 2003 |
| | | | | US | 2002-0077400 | A1 | 20 June 2002 |
| | | | | US | 6534576 | B2 | 18 March 2003 |
| JP | 2022-010421 | A | 14 January 2022 | CN | 110072919 | A | 30 July 2019 |
| | | | | EP | 3556795 | A1 | 23 October 2019 |
| | | | | EP | 3556795 | A4 | 13 November 2019 |
| | | | | EP | 3556795 | B1 | 27 October 2021 |
| | | | | JP | 2018-095729 | A | 21 June 2018 |
| | | | | JP | 2018-127619 | A | 16 August 2018 |
| | | | | JP | 2018-164086 | A | 18 October 2018 |
| | | | | JP | 6984121 | B2 | 17 December 2021 |
| | | | | JP | 7040208 | B2 | 23 March 2022 |
| | | | | JP | 7091683 | B2 | 28 June 2022 |
| | | | | JP | 7405126 | B2 | 26 December 2023 |
| | | | | KR | 10-2019-0091517 | A | 06 August 2019 |
| | | | | KR | 10-2550879 | B1 | 03 July 2023 |
| | | | | US | 11608415 | B2 | 21 March 2023 |
| | | | | US | 2019-0292320 | A1 | 26 September 2019 |
| | | | | US | 2023-0250237 | A1 | 10 August 2023 |
| | | | | WO | 2018-110613 | A1 | 21 June 2018 |
| JP | 2001-323152 | A | 20 November 2001 | JP | 4577736 | B2 | 10 November 2010 |
| JP | 2014-185293 | A | 02 October 2014 | JP | 6135232 | B2 | 31 May 2017 |

Form PCT/ISA/210 (patent family annex) (July 2022)

**REFERENCES CITED IN THE DESCRIPTION**

**Patent documents cited in the description**

- KR 1020230073158

- JP 6947913 B